# EUROPÄISCHE PATENTSCHRIFT

(11) **EP 0 992 408 B1**
(45) Veröffentlichungstag und Bekanntmachung des Hinweises auf die Patenterteilung: **17.12.2003**
(21) Anmeldenummer: 99119530.6
(22) Anmeldetag: 01.10.1999
(51) Int. Cl.: B60R 25/00, E05B 49/00

(54) **Verfahren zur Herstellung der Zugangsberechtigung zu einem motorangetriebenen Fahrzeug**
Method to provide access authorization to a motor vehicle
Procédé permettant de réaliser l'autorisation d'accès pour un véhicule à moteur

(30) Priorität: 10.10.1998 DE 19846803
(43) Veröffentlichungstag der Anmeldung: 12.04.2000
(73) Patentinhaber: Conti Temic microelectronic GmbH, 90411 Nürnberg (DE)
(72) Erfinder: Müller, Karl-Heinz, 88045 Friedrichshafen (DE); Ulke, Walter, 88048 Friedrichshafen (DE); Voss, Wolfgang, 88090 Immenstaad (DE); Knepper, Udo, 88085 Langenargen (DE)

(56) Entgegenhaltungen:
- EP-A- 0 523 602
- EP-A- 0 580 139
- DE-C- 19 718 764
- DE-C- 19 728 761

## Beschreibung

Die Erfindung betrifft ein Verfahren zur Herstellung der Zugangsberechtigung zu einem motorangetriebenen Fahrzeug.

Bei motorangetriebenen Fahrzeugen wird die Zugangsberechtigung zum Fahrzeug in zwei getrennte Vorgänge untergliedert: einerseits in den Zutritt zum Fahrzeug (den Schließ-/Öffnungsvorgang des Fahrzeugs durch Schließen/Öffnen der Fahrzeugtüren), andererseits in die Inbetriebnahme des Fahrzeugs (den Startvorgang des Fahrzeugmotors durch Bedienung des Zündschlosses.

Üblicherweise erfolgt die Herstellung der Zugangsberechtigung zum Fahrzeug auf mechanischem Wege, d.h. mittels eines konventionellen Fahrzeugschlüssels. Daneben werden zur Herstellung der Zugangsberechtigung in zunehmendem Maße auch elektronische Verfahren eingesetzt, bei denen codierte Signale zwischen einem elektronischen Schlüssel und mindestens einer im oder am Fahrzeug (insbesondere an der Peripherie des Fahrzeugs) angeordneten Übertragungseinheit übertragen werden. Bsp. werden codierte Signale zwischen einem elektronischen Schlüssel und einem Türschloß zum Entriegeln des Türschlosses und/oder zwischen einer Fernbedienung und einem Antriebssteuergerät und/oder einem Diebstahlsicherungsgerät (einer Wegfahrsperre) zum Freischalten des Antriebssteuergeräts übertragen; nach Auswertung und Verifizierung der Signale sowie ggf. nach Erfüllung bestimmter Bedingungen wird die Zugangsberechtigung zum Fahrzeug hergestellt.

Für die beiden getrennten Vorgänge der Zugangsberechtigung - einerseits Zutritt zum Fahrzeug, andererseits Inbetriebnahme des Fahrzeugs - sind in der Regel unterschiedliche Aktivitäten des Bedieners erforderlich und unterschiedliche zu erfüllende Bedingungen vorgesehen: bsp. darf eine Inbetriebnahme des Fahrzeugs nur dann erfolgen, wenn sich der elektronische Schlüssel innerhalb des Fahrzeugs befindet; weiterhin sollten die Fahrzeugtüren aus Sicherheitsgründen nur dann abgeschlossen werden dürfen, wenn sich der elektronische Schlüssel außerhalb des Fahrzeugs befindet. Demzufolge müssen die beiden Vorgänge der Zugangsberechtigung voneinander unterschieden werden, wofür die Position des elektronischen Schlüssels ermittelt werden muß - insbesondere muß dessen Position bezüglich des Innenraums und Außenraums des Fahrzeugs festgestellt werden können ("Innenraumdetektion").

Die EP 0 532 602 A1, die den nächstkommenden Stand der Technik bildet, zeigt und beschreibt ein Verfahren zum Erkennen eines im Fahrzeuginneren eingeschlossenen tragbaren Transponders innerhalb eines Zutrittsystems für ein Fahrzeug. Das Verfahren arbeitet mit Frage-Antwort-Codesignalen, wobei eine bidirektionale Signalübertragung zwischen drei im und am Fahrzeug angebrachten Antennen und einem tragbaren Transponder erfolgt. Ein Betätigen einer Tür-Handhabe im Schließsinne löst einen Frage-Antwort-Dialog zwischen den Antennen und dem Transponder aus, wobei die Position des Transponders aus den Signalen (Feldstärkeverlauf) an den Antennen ermittelt wird. Ein Verriegelungswunsch wird nur sofort realisiert, wenn sich der Transponder außerhalb des Fahrzeugs befindet.

Der Erfindung liegt die Aufgabe zugrunde, ein Verfahren zur Herstellung der Zugangsberechtigung zu einem motorangetriebenen Fahrzeug anzugeben, bei dem eine zuverlässige Herstellung der Zugangsberechtigung für den berechtigten Bediener auf einfache Weise ermöglicht wird.
Diese Aufgabe wird erfindungsgemäß durch die Merkmale des Patentanspruchs 1 gelöst. Vorteilhafte Ausgestaltungen der Erfindung ergeben sich aus den weiteren Patentansprüchen.

Beim vorgestellten Verfahren wird bei einem Bedienerwunsch zur Herstellung der Zugangsberechtigung zu einem motorangetriebenen Fahrzeug, d.h. entweder zur Herstellung des Zutritts zum Fahrzeug mit der Durchführung eines Schließ- oder Öffnungsvorgangs der Fahrzeugtüren oder zur Herstellung der Inbetriebnahme des Fahrzeugs mit der Durchführung des Motorstartvorgangs, eine bidirektionale Signalübertragung (bidirektionale Kommunikation) zwischen mindestens zwei (vorzugsweise jedoch mindestens drei) im oder am Fahrzeug fest angebrachten Übertragungseinheiten und dem vom Bediener mitgeführten elektronischen Schlüssel durchgeführt, bei der zumindest die Signallaufzeit der zwischen der jeweiligen Übertragungseinheit und dem elektronischen Schlüssel bidirektional übertragenen Signale bestimmt wird. Die Entfernung zwischen den Übertragungseinheiten und dem elektronischen Schlüssel erhält man durch Auswertung dieser Signallaufzeit, d.h. durch Ermittlung der Zeitdifferenz zwischen dem von der jeweiligen Übertragungseinheit zum elektronischen Schlüssel gesendeten Fahrzeugsignal, insbesondere dem zu Beginn der Signalübertragung (Kommunikation) als erstes Fahrzeugsignal gesendetem Aktivierungssignal und dem bei der jeweiligen Übertragungseinheit eintreffenden vom elektronischen Schlüssel zurückgesendeten Schlüsselsignal (Echosignal); die Auswertung dieser Signallaufzeitmessung kann bsp. durch ein mit den Übertragungseinheiten verbundenes Steuergerät erfolgen. Zur Unterdrückung unerwünschter Echoeffekte beim Schlüsselsignal (d.h. zur Unterscheidung des erwünschten Echosignals von unerwünschten Echosignalen) können unterschiedliche Methoden eingesetzt werden: bsp. kann das vom elektronischen Schlüssel zur jeweiligen Übertragungseinheit zurückgesendete Schlüsselsignal erst nach einer bestimmten vorgegebenen Verzögerungszeit nach dem Empfang des Fahrzeugsignals emittiert werden, die bei der Signallaufzeitmessung und der Entfernungsbestimmung entsprechend berücksichtigt werden muß, oder das gewünschte Echosignal kann charakteristisch "gefärbt" werden (bsp. durch einen Frequenzversatz zwischen der Frequenz des Fahrzeugsignals und der Frequenz des Schlüsselsignals). Da sukzessive Signallaufzeitmessungen zwischen mindestens zwei (vorzugsweise mindestens drei) an unterschiedlichen Stellen des Fahrzeugs befindlichen Übertragungseinheiten und dem elektronischen Schlüssel vorgenommen werden, kann die Position des elektronischen Schlüssels durch Vergleich und Auswertung der Signallaufzeiten der bei unterschiedlichen Übertragungseinheiten eintreffenden Schlüsselsignale bestimmt werden. Insbesondere können Grenzwerte für die Signallaufzeit vorgegeben werden, bsp. für die maximal zulässige Signallaufzeit (durch Vorgabe einer Obergrenze) und/oder für zulässige Bereiche der Signallaufzeit (durch Vorgabe einer Obergrenze und Untergrenze), die die maximal zulässige Entfernung und/oder zulässige Entfernungsbereiche für die Signalübertragung (Kommunikation) zwischen dem elektronischen Schlüssel und den Übertragungseinheiten bzw. dem Fahrzeug festlegen; d.h. die Durchführung des Bedienerwunsches (die Freigabe des von ihm gewünschten Vorgangs bei der Herstellung der Zugangsberechtigung) wird nur beim Vorliegen eines bestimmten Entfernungsfensters vorgenommen. Hierdurch ist einerseits eine Begrenzung der zulässigen Signalübertragungsstrecke (und demzufolge der zulässigen Entfernung des Benutzers vom Fahrzeug für die Durchführung seines Bedienerwunsches bzw. für die Herstellung der Zugangsberechtigung) und andererseits eine Unterscheidung zwischen dem Innenraum und dem Außenraum des Fahrzeugs möglich (Innenraumdetektion). Insbesondere können für den Zutritt zum Fahrzeug und für die Inbetriebnahme des Fahrzeugs unterschiedliche Grenzwerte für die Signallaufzeit und damit unterschiedliche zulässige Entfernungsbereiche vorgegeben werden, die für unterschiedliche Fahrzeuge und/oder unterschiedliche Fahrzeugtypen auf einfache Weise angepaßt werden können.

Im Rahmen der Signalübertragung kann zusätzlich zur Bestimmung der Position des elektronischen Schlüssels auch eine (bidirektionale) Datenübertragung zwischen dem elektronischen Schlüssel und den Übertragungseinheiten vorgenommen werden, bsp. zur Übertragung von kryptologischen Daten (bsp. mittels "challenge and response"-Protokollen) und/oder von zur Lokalisierung erforderlichen Daten (bsp. zur Identifikation bzw. der jeweiligen Übertragungseinheit oder für eine Kennung der Übertragungseinheiten). Anhand dieser übertragenen Daten kann eine Verifizierung des elektronischen Schlüssels vorgenommen werden, d.h. die Berechtigung des Bedieners zur Herstellung der Zugangsberechtigung überprüft werden.

Die bidirektionale Signalübertragung zwischen den Übertragungseinheiten und dem elektronischen Schlüssel kann entweder mittels Pulsen oder mittels kontinuierlicher Signale (cw-Verfahren) mit geeigneter Modulation und mittels eines geeigneten Übertragungsprinzips (bsp. HF, IR oder Ultraschall) vorzugsweise im Mikrowellenbereich durchgeführt werden. Die Übertragungssignale der Übertragungseinheiten und des elektronischen Schlüssels, d.h. das Fahrzeugsignal und das Schlüsselsignal, können mit der gleichen Sendefrequenz (Trägerfrequenz) oder mit unterschiedlichen Sendefrequenzen emittiert werden, bsp. im HF-Bereich in einem ISM-Band mit einer Sendefrequenz von bsp. 2.4 GHz oder 5.8 GHz. Hierbei muß bei der Signalübertragung eine für eine hochauflösende Zeitmessung erforderliche hohe Bandbreite der Übertragungssignale (bsp. > 10 MHz) realisiert werden, damit die gewünschte Entfernungsauflösung zur Lokalisierung der momentanen Position des elektronischen Schlüssels (des berechtigten Bedieners) ermöglicht wird. Die bidirektionale Signalübertragung zwischen den Übertragungseinheiten und dem elektronischen Schlüssel erfolgt mit einer hohen Übertragungsrate, bsp. mit einer Übertragungsrate von mehr als 1oo kBaud. Bei einer pulsförmigen Signalübertragung kann ein geeignetes Pulsmodulationsverfahren angewendet werden; die Dateninformation kann bsp. in der Pulsdauer der übertragenen Pulse oder in der Länge von Pulspaketen (Anzahl von Pulsen) codiert werden.

Die Übertragungseinheiten sind im oder am Fahrzeug so verteilt angeordnet, daß die momentane Position des elektronischen Schlüssels gut und ausreichend genau bestimmt werden kann, was insbesondere durch eine bestimmte Mindestanzahl der Übertragungseinheiten und durch eine räumlich annähernd äquidistante Verteilung der Übertragungseinheiten erreichbar ist. Der vom Bediener mitzuführende und zur Identifikation des Bedieners bzw. als Berechtigungsnachweis dienende elektronische Schlüssel (ID-Geber) kann beliebig ausgebildet sein, bsp. in Form einer Scheckkarte oder als Schlüssel mit Schlüsselbart oder als bartloser Schlüssel.

Die Übertragungseinheiten werden entweder erst bei einem Bedienerwunsch zur Herstellung der Zugangsberechtigung zum Fahrzeug aktiviert oder sind ständig aktiviert, d.h. sie senden ein Aktivierungssignal als erstes Fahrzeugsignal entweder erst bei einer Bedieneraktivität oder aber in bestimmten Zeitabständen zyklisch aus. Diese Bedieneraktivität als auslösendes Moment für den Beginn der bidirektionalen Signalübertragung (Kommunikation) zwischen den Übertragungseinheiten und dem elektronischen Schlüssel ist unterschiedlich für die beiden Formen der Zugangsberechtigung: für den Zutritt zum Fahrzeug ist dies bsp. eine Betätigung eines Türgriffs (bsp. des Türgriffs der Fahrertüre, der Beifahrertüre oder der Heckklappe), für die Inbetriebnahme des Fahrzeugs ist dies bsp. die Betätigung des Startschalters. Die Signalübertragung des Schlüsselsignals von dem vom Bediener mitgeführten elektronischen Schlüssel zu den Übertragungseinheiten wird in jedem Fall erst durch den Empfang eines Signals von einer Übertragungseinheit initiiert.

Zusätzlich kann auch bei laufendem Motor eine Überwachung der Position des elektronischen Schlüssels vorgenommen werden, insbesondere während der Fahrt des Fahrzeugs; bsp. kann ein Warnsignal (Alarmsignal) ausgegeben werden, wenn der elektronische Schlüssel bei laufendem Motor aus dem Innenraum des Fahrzeugs entfernt wird.

Beim vorgestellten Verfahren ist die Herstellung der Zugangsberechtigung zu einem motorangetriebenen Fahrzeug auf einfache Weise möglich und vorteilhafterweise mit einer hohen Sicherheit verbunden, da durch die kurzen Signalübertragungszeiten und die präzise und reproduzierbare Vorgabe von zulässigen Entfernungsbereichen für die Signalübertragung (insbesondere für die maximale Reichweite) Manipulationen wirksam verhindert werden können. Weiterhin kann auf einfache Weise eine Positionsbestimmung des elektronischen Schlüssels und insbesondere eine gute Unterscheidung zwischen dem Innenraum und dem Außenraum des Fahrzeugs (Innenraumdetektion) getroffen werden.

Das Verfahren wird im folgenden anhand eines Ausführungsbeispiels im Zusammenhang mit der Zeichnung näher beschrieben. Hierbei zeigen:

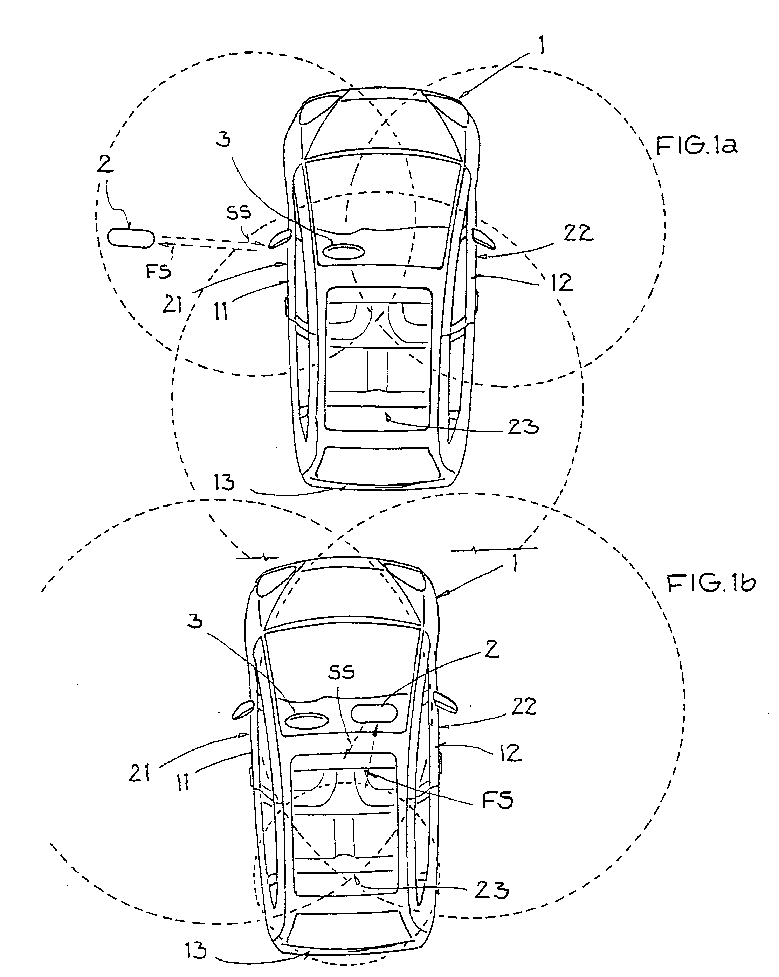

- Figur 1: den schematischen Aufbau eines Kraftfahrzeugs mit den zulässigen Entfernungsbereichen für die Signalübertragung für beide Vorgänge zur Herstellung der Zugangsberechtigung zum Fahrzeug, d.h. für den Zutritt zum Fahrzeug (Fig. 1a) und für die Inbetriebnahme des Fahrzeugs (Fig. 1b),

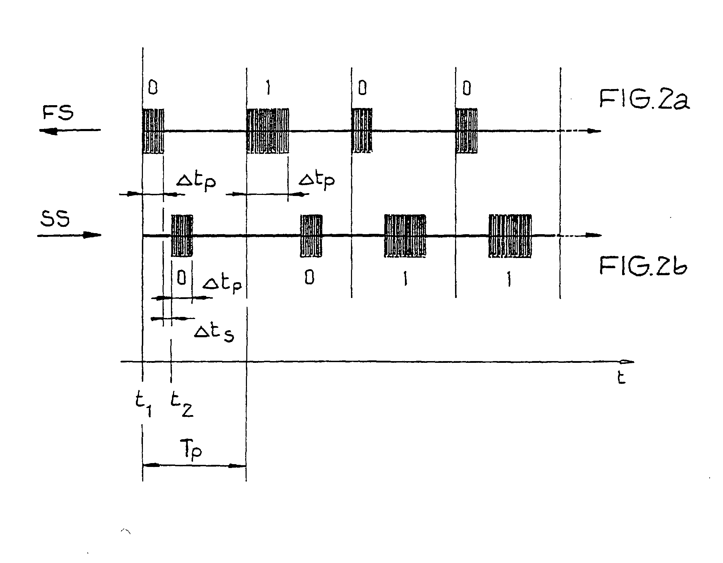

- Figur 2: den zeitlichen Verlauf der bidirektionalen Signalübertragung zwischen den Übertragungseinheiten und dem elektronischen Schlüssel im Falle einer pulsförmigen Signalübertragung mit digitaler Pulsdauermodulation, wobei in der Fig. 2a das von der Übertragungseinheit emittierte Fahrzeugsignals und in der Fig. 2b das von der Übertragungseinheit detektierte Schlüsselsignal dargestellt ist.

Gemäß der Figur 1 sind dem Fahrzeug 1 drei Übertragungseinheiten 21, 22, 23 zugeordnet; die erste Übertragungseinheit 21 ist in einer Zierleiste auf der Fahrerseite, die zweite Übertragungseinheit 22 in einer Zierleiste auf der Beifahrerseite und die dritte Übertragungseinheit 23 in der dritten Bremsleuchte bzw. in der Hutablage angeordnet. Die Übertragungseinheiten 21, 22, 23 senden zyklisch in periodischen. Abständen Aktivierungssignale als Fahrzeugsignale FS aus; der bsp. in Form eines bartlosen Schlüssels ausgebildete elektronische Schlüssel 2 wird vom Bediener (vom berechtigten Benutzer) mitgeführt und gilt als Legitimation bei einem Bedienerwunsch zur Herstellung der Zugangsberechtigung zum Fahrzeug 1, d. h. mit ihm wird die Berechtigung des Bedieners für den Zutritt zum Fahrzeug 1 und für die Inbetriebnahme des Fahrzeugs 1 (für den Motorstartvorgang) überprüft. Die bidirektionale Signalübertragung (Kommunikation), d.h. die Signalübertragung des Schlüsselsignals SS vom elektronischen Schlüssel 2 zu den Übertragungseinheiten 21, 22, 23 wird durch eine Bedieneraktivität initiiert: beim Zutritt zum Fahrzeug 1 durch Betätigung eines Türgriffs (der Fahrertüre 11, der Beifahrertüre 12 oder der Heckklappe 13), bei der Inbetriebnahme des Fahrzeugs 1 durch Betätigung des bsp. am Armaturenbrett angeordneten Startschalters 3. Nur für den Fall, daß die Signallaufzeit zwischen den Übertragungseinheiten 21, 22, 23 und dem elektronischen Schlüssel 2 innerhalb eines vorgegebenen Zeitfensters liegt, d.h. die Entfernung zwischen der jeweiligen Übertragungseinheit 21; 22; 23 und dem elektronischen Schlüssel 2 innerhalb eines vorgegebenen, der Signallaufzeit entsprechenden Entfernungsbereichs liegt, erfolgt eine Auswertung des von der jeweiligen Übertragungseinheit 21; 22; 23 detektierten Schlüsselsignals SS und damit eine Verifizierung der zwischen der jeweiligen Übertragungseinheit 21; 22; 23 und dem elektronischen Schlüssel 2 übertragenen Daten.

Wie ein Vergleich der Figuren 1a und 1b zeigt, sind für die beiden Vorgänge zur Herstellung der Zugangsberechtigung zum Fahrzeug 1 unterschiedliche Bereiche für die zulässige Signallaufzeit zwischen den Übertragungseinheiten 21, 22, 23 und dem elektronischen Schlüssel 2 und damit unterschiedliche zulässige Entfernungsbereiche für die Entfernung zwischen den Übertragungseinheiten 21, 22, 23 und dem elektronischen Schlüssel 2 definiert:
- Gemäß der Figur 1a muß bei einem Bedienerwunsch zur Herstellung des Zutritts zum Fahrzeug 1 (Öffnung der Fahrzeugtüren 11, 12, 13) je nach zu betätigender Fahrzeugtüre 11; 12; 13 ein Schlüsselsignal SS von unterschiedlichen Übertragungseinheiten 21; 22; 23 innerhalb des zulässigen Zeitfensters detektiert werden: bei einer Betätigung der Fahrertüre 11 von der ersten Übertragungseinheit 21 oder der dritten Übertragungseinheit 23, bei einer Betätigung der Beifahrertüre 12 von der zweiten Übertragungseinheit 22 oder der dritten Übertragungseinheit 23, und bei einer Betätigung der Heckklappe 13 nur von der dritten Übertragungseinheit 23. Zur Verhinderung eines unbefugten Öffnens des Fahrzeugs 1 bei Überreichweiten der Übertragungssignale wird die maximal zulässige Entfernung für die Kommunikation zwischen dem elektronischen Schlüssel 2 und den Übertragungseinheiten 21, 22, 23 des Fahrzeugs auf bsp. 3 m begrenzt.
- Gemäß der Figur 1 b muß bei einem Bedienerwunsch zur Herstellung der Inbetriebnahme des Fahrzeugs 1 ein Schlüsselsignal SS von der ersten Übertragungseinheit 21 und der zweiten Übertragungseinheit 22 oder von der ersten Übertragungseinheit 21 und der dritten Übertragungseinheit 23 oder von der zweiten Übertragungseinheit 22 und der dritten Übertragungseinheit 23 oder von der ersten Übertragungseinheit 21 und der zweiten Übertragungseinheit 22 und der dritten Übertragungseinheit 23 der innerhalb des zulässigen Zeitfensters (als Maß für die zulässige Entfernung) detektiert werden; dies bedeutet, daß sich der elektronische Schlüssel 2 innerhalb des Fahrzeugs 1 befindet und somit ein unbefugtes Starten des Fahrzeugmotors durch eine Betätigung des Startschalters 3 verhindert werden kann, wenn sich der elektronische Schlüssel 2 nicht im Fahrzeug 1 befindet.

In der Figur 2 ist die zeitliche Abfolge der von einer Übertragungseinheit 21; 22; 23 des Fahrzeugs 1 ausgesendeten Fahrzeugsignale FS (Fig. 2a) und der von einer Übertragungseinheit 21; 22; 23 des Fahrzeugs 1 empfangenen Schlüsselsignale SS (Fig. 2b) dargestellt. Die pulsförmige bidirektionale Signalübertragung zwischen den Übertragungseinheiten 21, 22, 23 und dem elektronischen Schlüssel 2 beinhaltet bsp. sowohl eine Signallaufzeitmessung als auch eine Datenübertragung kryptologischer Daten.

Gemäß der Figur 2a wird von einer der Übertragungseinheiten 21; 22; 23 zum Zeitpunkt t₁ ein sich an eine Bedieneraktivität anschließendes Aktivierungssignal als erstes Fahrzeugsignal FS emittiert und hierdurch der elektronische Schlüssel 2 aktiviert (Pulslänge Δt_{P} bsp.20 ns, Trägerfrequenz des Fahrzeugsignals FS bsp. 5.8 GHz, Bandbreite > 10 MHz, Flankensteilheit 10 ns). Gemäß der Figur 2b wird vom elektronischen Schlüssel 2 entweder unmittelbar nach seiner Aktivierung oder nach einer vorgegebenen Verzögerungszeit (bsp. 100 ns) ein Schlüsselsignal SS als Echosignal zu dieser Übertragungseinheit 21; 22; 23 zurückgesendet (Pulslänge Δt_{P} bsp. 20 ns, Trägerfrequenz des Schlüsselsignal SS bsp. 5.8 GHz,), das gemäß Fig. 2b zum Zeitpunkt t₂ von der jeweiligen Übertragungseinheit 21; 22; 23 detektiert wird. Die Signallaufzeit Δt_{S} wird unter Berücksichtigung der Verzögerungszeit ermittelt und hieraus die Entfernung zwischen der jeweiligen Übertragungseinheit 21; 22; 23 und dem elektronischen Schlüssel 2 bestimmt. Diese bidirektionale Signalübertragung zwischen der Übertragungseinheit 21; 22; 23 und dem elektronischen Schlüssel 2 und die Ermittlung der Signallaufzeit Δt_{S} wird sukzessive zwischen allen drei Übertragungseinheiten 21; 22; 23 und dem elektronischen Schlüssel 2 durchgeführt, woraus sich die Position des elektronischen Schlüssels 2 bezüglich des Fahrzeugs 1 feststellen läßt. Gleichzeitig wird zum Austausch kryptologischer Protokolle ("challenge and response"-Protokolle) eine Datenübertragung zwischen den Übertragungseinheiten 21, 22, 23 und dem elektronischen Schlüssel 2 vorgenommen, wobei der zeitliche Abstand T_{P} zwischen den einzelnen Pulsen, d.h. die Periodendauer bei der Signalübertragung bsp. 10 µs beträgt (Datenübertragungsrate bsp. 100 kBaud). Die Dateninformation ist hierbei bsp. durch die Pulslänge Δt_{P} der übertragenen Pulse von Fahrzeugsignal FS und Schlüsselsignal SS festgelegt: überschreitet die Pulslänge Δt_{P} von Fahrzeugsignal FS und Schlüsselsignal SS einen bestimmten Schwellwert, wird dies als erster logischer Signalpegel interpretiert (bsp. als logische "1 "), unterschreitet die Pulslänge Δt_{P} von Fahrzeugsignal FS und Schlüsselsignal SS einen bestimmten Schwellwert, wird dies als zweiter logischer Signalpegel interpretiert (bsp. als logische "0"). Wenn anhand der kryptologischen Protokolle die Berechtigung des elektronischen Schlüssels 2 und damit des Bedieners verifiziert wurde, wird der Bedienerwunsch zur Herstellung der Zugangsberechtigung zum Fahrzeug 1 (Zutritt oder Inbetriebnahme) ausgeführt.

## Patentansprüche

1. Verfahren zur Herstellung der Zugangsberechtigung zu einem motorangetriebenen Fahrzeug (1), bei dem eine bidirektionale Signalübertragung mittels codierten Übertragungssignalen (FS, SS) zwischen mindestens zwei am oder im Fahrzeug (1) angeordneten Übertragungseinheiten (21, 22, 23) und einem elektronischen Schlüssel (2) vorgenommen wird, wobei als codierte Übertragungssignale (FS, SS) Fahrzeugsignale (FS) von den Übertragungseinheiten (21; 22; 23) an den elektronischen Schlüssel (2) gesendet und Schlüsselsignale (SS) als Echosignale vom elektronischen Schlüssel (2) zu den jeweiligen Übertragungseinheiten (21; 22; 23) zurückgesendet werden,
wobei
• zumindest die Signallaufzeit als Zeitdifferenz zwischen einem Fahrzeugsignal (FS) und dem zugeordneten Schlüsselsignal (SS) bei unterschiedlichen Übertragungseinheiten (21; 22; 23) bestimmt und ausgewertet wird,
• anhand der Auswertung der Zeitdifferenzen die Position des elektronischen Schlüssels (2) bezüglich des Fahrzeugs (1) bestimmt wird,
• anhand der Bestimmung der Position des elektronischen Schlüssels (2) eine Entscheidung über die Zugangsberechtigung zum Fahrzeug (1) getroffen wird.

2. Verfahren nach Anspruch 1, **dadurch gekennzeichnet, daß** für die Signallaufzeit Grenzwerte vorgegeben werden, durch die zulässige Obergrenzen und/oder zulässige Bereiche für die Entfernung zwischen dem Fahrzeug (1) und dem elektronischen Schlüssel (2) festgelegt werden.

3. Verfahren nach Anspruch 1 oder 2, **dadurch gekennzeichnet, daß** die Auswertung der Signallaufzeit als Zeitdifferenz zwischen dem Fahrzeugsignal (FS) und dem zugeordneten Schlüsselsignal (SS) in der jeweiligen Übertragungseinheit (21; 22; 23) und/oder in einer mit den Übertragungseinheiten (21, 22, 23) verbundenen Steuereinheit vorgenommen wird.

4. Verfahren nach einem der Ansprüche 1 bis 3, **dadurch gekennzeichnet, daß** die bidirektionale Signalübertragung zwischen den Übertragungseinheiten (21, 22, 23) und dem elektronischen Schlüssel (2) durch eine am oder im Fahrzeug (1) erfolgende einen Bedienerwunsch signalisierende Aktivität initiiert wird.

5. Verfahren nach einem der Ansprüche 1 bis 4, **dadurch gekennzeichnet, daß** von mindestens einer der Übertragungseinheiten (21; 22; 23) als erstes Fahrzeugsignal (FS) ein Aktivierungssignal an den elektronischen Schlüssel (2) ausgesendet wird.

6. Verfahren nach Anspruch 5, **dadurch gekennzeichnet, daß** die Aktivierungssignale von den Übertragungseinheiten (21; 22; 23) in periodischen zeitlichen Abständen emittiert werden.

7. Verfahren nach Anspruch 4 oder 5, **dadurch gekennzeichnet, daß** die Aktivierungssignale von den Übertragungseinheiten (21; 22; 23) erst nach der am oder im Fahrzeug (1) erfolgenden einen Bedienerwunsch signalisierenden Aktivität emittiert werden.

8. Verfahren nach einem der Ansprüche 1 bis 7, **dadurch gekennzeichnet, daß** in den Übertragungssignalen (FS, SS) Dateninformationen codiert werden.

9. Verfahren nach einem der Ansprüche 1 bis 8, **dadurch gekennzeichnet, daß** die bidirektionale Signalübertragung zwischen den Übertragungseinheiten (21, 22, 23) und dem elektronischen Schlüssel (2) mit Schallwellen oder elektromagnetischen Wellen vorgenommen wird.

10. Verfahren nach einem der Ansprüche 1 bis 9, **dadurch gekennzeichnet, daß** die bidirektionale Signalübertragung zwischen den Übertragungseinheiten (21, 22, 23) und dem elektronischen Schlüssel (2) mittels Pulsen vorgenommen wird.

11. Verfahren nach einem der Ansprüche 1 bis 9, **dadurch gekennzeichnet, daß** die bidirektionale Signalübertragung zwischen den Übertragungseinheiten (21, 22, 23) und dem elektronischen Schlüssel (2) mittels eines modulierten kontinuierlichen Signals vorgenommen wird.

12. Verfahren nach einem der Ansprüche 1 bis 11, **dadurch gekennzeichnet, daß** das Schlüsselsignal (SS) erst nach einer bestimmten Verzögerungszeit nach dem Empfang des Fahrzeugsignals (FS) an die Übertragungseinheiten (21, 22, 23) zurückgesendet wird.

13. Verfahren nach einem der Ansprüche 1 bis 12, **dadurch gekennzeichnet, daß** das Schlüsselsignal (SS) gegenüber den empfangenen Fahrzeugsignalen (FS) modifiziert wird, so daß bei der Auswertung eine Unterscheidung zwischen dem Schlüsselsignal (SS) als erwünschtem Echosignal und unerwünschten Echosignalen ermöglicht wird.

## Claims

1. A method of providing access-authorisation to an engine driven vehicle (1) wherein a bi-directional signal transmission process is effected between at least two transmission units (21, 22, 23) mounted in or on the vehicle (1) and an electronic key (2), wherein vehicle signals (FS) are transmitted in the form of coded transmission signals (FS, SS) from the transmission units (21; 22; 23) to the electronic key (2) and key signals (SS) are transmitted back in the form of echo signals from the electronic key (2) to the relevant transmission units (21; 22; 23),
wherein
• at least the signal transit time in the form of the time difference between a vehicle signal (FS) and the associated key signal (SS) is determined and evaluated for the different transmission units (21; 22; 23),
• the position of the electronic key (2) relative to the vehicle (1) is determined with the aid of the evaluation of the time differences,
• a decision is made regarding access-authorisation to the vehicle (1) with the aid of the determination of the position of the electronic key (2).

2. A method in accordance with Claim 1, **characterised in that** limiting values are predefined for the signal transit time, the permissible upper limits and/or the permissible ranges for the separation between the vehicle (1) and the electronic key (2) being defined by said limiting values.

3. A method in accordance with Claim 1 or 2, **characterised in that** the evaluation of the signal transit time in the form of the time difference between the vehicle signal (FS) and the associated key signal (SS) is effected in the relevant transmission unit (21; 22; 23) and/or in a control unit connected to the transmission units (21, 22, 23).

4. A method in accordance with any of the Claims 1 to 3, **characterised in that** the bi-directional signal transmission process between the transmission units (21, 22, 23) and the electronic key (2) is initiated by an activity signalising a user's wishes that is effected in or on the vehicle (1).

5. A method in accordance with any of the Claims 1 to 4, **characterised in that** an activating signal is transmitted in the form of a first vehicle signal (FS) to the electronic key (2) by at least one of the transmission units (21; 22; 23).

6. A method in accordance with Claim 5, **characterised in that** the activating signals are emitted by the transmission units (21; 22; 23) at periodic intervals.

7. A method in accordance with Claim 4 or 5, **characterised in that** the activating signals are emitted by the transmission units (21; 22; 23) only after the activity signalising a user's wishes has been effected in or on the vehicle (1).

8. A method in accordance with any of the Claims 1 to 7, **characterised in that** items of data information are coded in the transmission signals (FS, SS).

9. A method in accordance with any of the Claims 1 to 8, **characterised in that** the bi-directional signal transmission between the transmission units (21, 22, 23) and the electronic key (2) is effected using sound waves or electromagnetic waves.

10. A method in accordance with any of the Claims 1 to 9, **characterised in that** the bi-directional signal transmission between the transmission units (21, 22, 23) and the electronic key (2) is effected by means of pulses.

11. A method in accordance with any of the Claims 1 to 9, **characterised in that** the bi-directional signal transmission between the transmission units (21, 22, 23) and the electronic key (2) is effected by means of a modulated continuous signal.

12. A method in accordance with any of the Claims 1 to 11, **characterised in that** the key signal (SS) is only transmitted back to the transmission units (21, 22, 23) after the elapse of a certain time delay following the reception of the vehicle signal (FS) .

13. A method in accordance with any of the Claims 1 to 12, **characterised in that** the key signal (SS) is modified with respect to the received vehicle signals (FS) so as to enable a distinction to be made between the key signal (SS) as a wanted echo signal and as an unwanted echo signal during the evaluation process.

## Revendications

1. Procédé pour établir l'autorisation d'accès à un véhicule automobile (1), selon lequel une transmission bidirectionnelle de signaux est réalisée à l'aide de signaux de transmission codés (FS, SS) entre au moins deux unités de transmission (21, 22, 23) disposées sur ou dans le véhicule (1) et une clé électronique (2), et dans lequel comme signaux de transmission codés (FS, SS), des signaux (FS) du véhicule sont envoyés par les unités de transmission (21; 22; 23) à la clé électronique (2) et des signaux (SS) de la clé sont renvoyés en tant que signaux d'échos par la clé électronique (2) aux unités de transmission respectives (21; 22; 23),
et selon lequel
• au moins le temps de propagation des signaux est déterminé et évalué en tant qu'intervalle de temps entre un signal (FS) du véhicule et le signal associé (SS) de la clé dans des unités de transmission différentes (21; 22; 23),
• la position de la clé électronique (2) par rapport au véhicule (1) est déterminée sur la base de l'évaluation des intervalles de temps,
• une décision concernant l'autorisation d'accès au véhicule (1) est déterminée sur la base de la détermination de la position de la clé électronique (2).

2. Procédé selon la revendication 1, **caractérisé en ce que** pour le temps de propagation des signaux, sont déterminées des valeurs limites, sur la base desquelles les limites supérieures admissibles et/où des gammes admissibles pour la distance entre le véhicule (1) et la clé électronique (2) sont fixées.

3. Procédé selon la revendication 1 ou 2, **caractérisé en ce que** l'évaluation du temps de propagation des signaux est réalisée en tant qu'intervalle de temps entre le signal (FS) du véhicule et le signál associé de la clé (SS) dans l'unité de transmission respective (21; 22; 23) et/ou dans une unité de commande reliée aux unités de transmission (21, 22, 23).

4. Procédé selon l'une des revendications 1 à 3, **caractérisé en ce que** la transmission bidirectionnelle de signaux entre les unités de transmission (21, 22, 23) et la clé électronique (2) est déclenchée par une activité de signalisation qui intervient sur ou dans le véhicule (1) et signale un souhait de l'utilisateur.

5. Procédé selon l'une des revendications 1 à 4, **caractérisé en ce qu'**un signal d'activation est envoyé à la clé électronique (2) par au moins l'une des unités de transmission (21; 22; 23), en tant que premier signal (FS) du véhicule.

6. Procédé selon la revendication 5, **caractérisé en ce que** les signaux d'activation sont émis par les unités de transmission (21; 22; 23) pendant des intervalles de temps périodiques.

7. Procédé selon la revendication 4 ou 5, **caractérisé en ce que** les signaux d'activation des unités de transmission (21; 22; 23) sont émis uniquement après l'activité qui intervient sur ou dans le véhicule (1) et signale un souhait de l'utilisateur.

8. Procédé selon l'une des revendications 1 à 7, **caractérisé en ce que** des informations de données sont codées dans les signaux de transmission (FS, SS).

9. Procédé selon l'une des revendications 1 à 8, **caractérisé en ce que** la transmission bidirectionnelle de signaux entre les unités de transmission (21, 22, 23) et la clé électronique (2) est réalisée à l'aide d'ondes acoustiques ou d'ondes électromagnétiques.

10. Procédé selon l'une des revendications 1 à.9, **caractérisé en ce que** la transmission bidirectionnelle de signaux entre les unités de transmission (21, 22, 23) et la clé électronique (2) est réalisée à l'aide d'impulsions.

11. Procédé selon l'une des revendications 1 à 9, **caractérisé en ce que caractérisé en ce que** la transmission bidirectionnelle de signaux entre les unités de transmission (21, 22, 23) et la clé électronique (2) est réalisée à l'aide d'un signal continu modulé.

12. Procédé selon l'une des revendications 1 à 11, **caractérisé en ce que** le signal (SS) de la clé est renvoyé aux unités de transmission (21, 22, 23) au bout d'un temps de retard déterminé après la réception du signal (FS) du véhicule.

13. Procédé selon l'une des revendications 1 à 12, **caractérisé en ce que** le signal (SS) de la clé est modifié par rapport aux signaux reçus (FS) du véhicule de sorte que lors d'une évaluation, il devient possible d'établir une distinction entre le signal (SS) de la clé en tant que signal d'écho désiré et des signaux d'échos indésirables.
